# EUROPEAN PATENT APPLICATION

(11) **EP 1 067 315 A2**
(43) Date of publication of application: **10.01.2001**
(21) Application number: 00114537.4
(22) Date of filing: 06.07.2000
(51) Int. Cl.: F16H 25/22, B30B 1/18

(54) **Ball screw with ball retainer**

(30) Priority: 08.07.1999 JP 19434399; 28.10.1999 JP 30697099
(71) Applicant: ISEL CO., LTD., Yao-shi, Osaka-fu, 581-0068 (JP)
(72) Inventor: Mochizuki, Masanori, c/o Isel Co., Ltd.,, Yao-shi, Osaka-fu, 581-0068 (JP)
(74) Representative: Leson, Thomas Johannes Alois, Dipl.-Ing.

(57) **Abstract**

A ball screw and a linearly movable apparatus using the ball screw. The ball screw comprises a thread shaft (1), a nut member (2) and a tubular retainer (3) interposed between the thread shaft and the nut member so as to be freely, relatively rotatable in relation to them. The retainer has a plurality of ball retaining holes which are formed so as to correspond with the thread grooves, for retaining the balls in such a manner that the balls are exposed from the inner and outer surfaces of the retainer. The ball retaining holes have such a size as to hold balls (100) in a freely rotatable condition. The outer ends of peripheral walls defining the ball retaining holes face the inside of the thread groove of the nut member. At least the minimum spacing between the outer ends of the peripheral walls is smaller than the diameter of the balls, and the thread shaft (1) is longer than the nut member (2). With the above arrangement, the load sustainable by the nut member in an axial direction can be increased. In addition, the reciprocating linear movement of the nut member can be smoothly performed by the rotation of the thread shaft without formation of a ball return passage in cases where the distance of the linear movement of the nut member is short.

## Description

### Background of the Invention

### Field of the Invention

The present invention relates to a ball screw, especially, having an open raceway and to a linearly movable apparatus using such a ball screw.

### Disclosure of the Prior Art

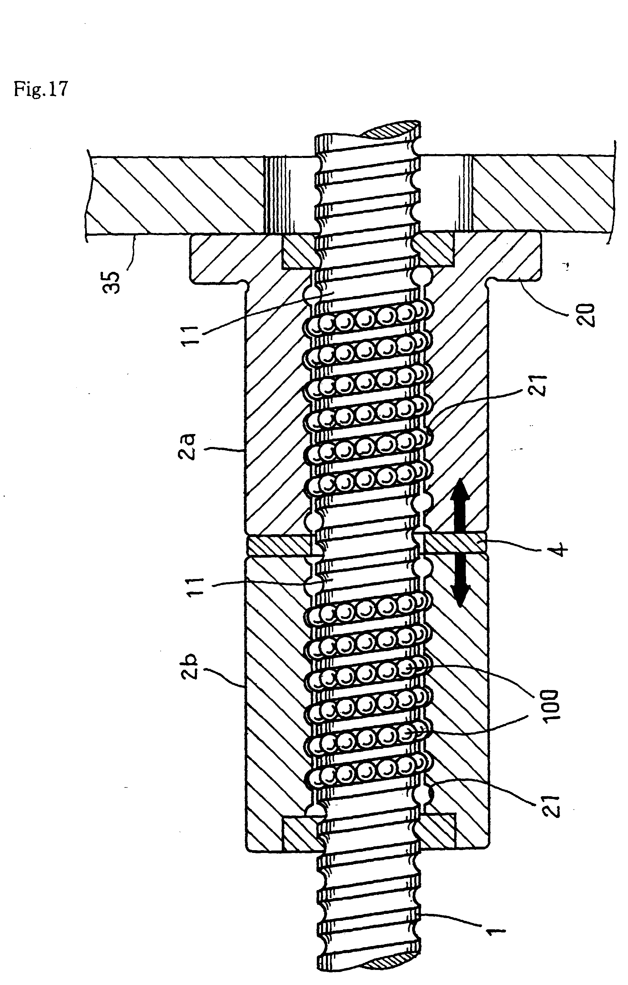

One known ball screw has, as shown in FIGURE 17, a number of balls (100) interposed between a thread shaft (1) and nut members (2a), (2b) fitting on the thread shaft (1). Thanks to the balls (100) which are so interposed as to be in rolling contact with thread grooves (11), (21) formed in the thread shaft (1) and the nut members (2a), (2b), friction resistance in screw pair area is extremely reduced compared to screws mechanism having directly contacting threads. Therefore, in case that this screw ball is used in a linearly movable apparatus in which the nut members (2a), (2b) are linearly moved by the rotation of the thread shaft (1), the rotating force of the thread shaft (1) is effectively converted into the axial movement force of the nut members (2a), (2b).

This conventional ball screw is however designed such that the raceway for the balls (100) continues in a closed loop fashion in order to permit the indefinite movement of the nut members (2a), (2b). Therefore, the nut members (2a), (2b) have a ball return passage (not shown) which permits circulation of the balls (100) between the thread groove (21) and the ball return passage.

For ensuring the smooth movement of the balls within the ball return passage, this ball return passage cannot be extended. Therefore, the conventional ball screw has a small number of effective ball-holding threads in the thread groove (21) of the nut member (2), and consequently presents the problem that the load sustainable by the nut member (2) in an axial direction cannot be increased.

In cases where the nut member (2) moves a long distance, the aforesaid ball return passage is indispensable. Where the relative moving distance of the thread shaft (1) and the nut member (2) in an axial direction is short, the balls (100) reciprocate only within a small region. In this case, the balls accommodated in the ball return passage not only become useless but also causes troubles such as damage to the metal tube which forms the ball return passage, inadequate operation due to the contact between the balls, and oil starvation, seizure or the like caused by inadequate operation. If such troubles occur, the balls cannot smoothly move in the overall ball raceway of the ball screw. This tends to be noticeable in high-speed operation.

As shown in FIGURE 17, a linearly movable apparatus having the above-described conventional ball screw often uses two nut members (2a), (2b) coupled to each other in series in order to increase the load sustainable by the nut members in an axial direction. Usually, one (2a) of the nut members is attached to an attachment wall (3) of a movable part, the movable part being moved by means of a flange (20) provided for the nut member (2a). In this arrangement, when the thread shaft (1) is rotatively driven, the movable part is moved so as to advance and retreat in an axial direction.

When the movable part reciprocates in an axial direction due to the reciprocating rotation of the thread shaft (1), there is a room for rolling movement between the thread groove (11) and the balls (100) so that jarring corresponding to the room occurs in an axial direction. This is backlash. This backlash could be an obstacle to improvements in the accuracy of the moving distance of the thread shaft (1). For eliminating the backlash, the conventional ball screw has a spacer (4) intermediate between the two nut members (2a) and (2b). Specifically, by appropriately setting the thickness of the spacing (4), displacement in screw pitch is caused between the right nut member (2a) and the left nut member (2b) shown in FIGURE 17 to cause the preload shown in the same figure. This prevents the backlash.

The conventional ball screw, however, has difficulty in setting preload because preload is determined in accordance with the thickness of the spacing (4). When the conventional ball screw is continuously used with a preload value which has been once set, the preload decreases because of wear. In this case, the conventional ball screw suffers from the problem that preload is virtually unadjustable because it is the only way for increasing preload to replace the spacing (4) with one having a different thickness.

### Summary of the Invention

A primary object of the invention is to provide a ball screw in which the load sustainable by a nut member in an axial direction can be increased and in which the nut member can be reciprocatingly, linearly moved in a smooth manner by the rotation of a thread shaft without forming the aforesaid ball return passage, in cases where the distance of the linear movement of the nut member is short.

A second object of the invention is to provide a linearly movable apparatus using a ball screw, in which even when the distance of the reciprocating linear movement is long, this movement can be smoothly, reliably carried out.

A third object of the invention is to provide a linearly movable apparatus using a ball screw, in which backlash can be positively prevented and in which when allowing preload to work on a region intermediate between the nut member and the thread shaft to prevent occurrence of backlash, not only preload can be easily applied but also increasing of preload can be facilitated.

The first object can be accomplished by a ball screw according to the invention comprising:
a thread shaft and a nut member which have their respective thread grooves which are formed such that their threads are opposed to each other with a plurality of balls between the thread grooves; and
a tubular retainer interposed between the thread shaft and the nut member so as to be freely movable relative to them,
   wherein the retainer is provided with a plurality of ball retaining holes which are formed so as to correspond with the thread grooves, for holding the balls in such a manner that the balls are exposed from the inner and outer surfaces of the retainer,
   wherein the ball retaining holes have such a size as to hold the balls in a freely rotatable condition, the outer ends of peripheral walls defining the ball retaining holes face the inside of the thread groove of the nut member, and at least the minimum spacing between the outer ends of the peripheral walls is smaller than the diameter of the balls, and
   wherein the thread shaft is longer than the nut member.

Since the outer ends of peripheral walls defining the ball retaining holes for rotatably holding the balls face the inside of the thread groove of the nut member and at least the minimum spacing between the outer ends of the peripheral walls is smaller than the diameter of the balls, each ball can be held in such a condition that it penetrates beyond the inner and outer surfaces of the retainer but does not escape from the retainer.

This ball screw can reciprocate a distance in a straight line which corresponds to, for instance, one to ten leads (one lead = 5 to 16 mm) of the thread grooves of the ball screw. In case that the length of the retainer is equal to the length of the nut member, the ends of the retainer sometimes project beyond the nut member during the reciprocating movement. In this case, parts of the balls project beyond the nut member. However, parts of these balls are held by the outer ends of the peripheral walls defining the retaining holes so as not to escape from the retainer and the balls are in contact with the thread shaft on the inner periphery side, so that the balls do not escape. Therefore, when the ball screw linearly reciprocates at high speed, each ball moves along the thread grooves synchronously with the retainer, being retained by the retainer.

The invention thus arranged has the following inherent effects.

Since the balls are held by the retainer so as to be prevented from escaping with a specified spacing between adjacent balls, the thread shaft and the nut member smoothly work without use of a ball return passage such as used in the prior art so that faulty operation of the thread shaft and the nut member due to seizure etc. in the ball return passage can be avoided.

In addition, since the outer ends of the peripheral walls defining each retaining hole project into the thread grooves of the nut member, the retainer is not caught by the thread grooves when moving along the thread grooves. Hence, even if the retainer is thin in other areas than the areas where the retaining holes of the retainer are formed, the outer ends prevent the balls from escaping.

The second object of the invention is achieved by a linearly movable apparatus using the ball screw which is directed to accomplishing the first object, the apparatus being characterized in that the thread shaft of the ball screw is coupled to an output shaft of a rotating drive and the nut member is coupled to a moving part relatively movable in relation to the rotating drive.

This has the same function and effects as those of the ball screw described earlier.

Even if the wall of the retainer is thin in other areas than the areas where the retaining holes are formed, escape of the balls can be prevented without fail by means of the outer ends which project into the through hole of the nut member (i.e., female screw). Accordingly, in the case of a linearly movable apparatus in which the nut member is coupled to a reciprocatingly movable part, it functions smoothly even if the distance of reciprocating movement is made long.

The third object can be achieved by the above-described linearly movable apparatus, wherein the nut member is composed of a first nut member and a second nut member which are coaxially coupled to each other being aligned in series, by means of coupled sections which can be freely relatively rotated and fixed.

Herein, "freely relatively rotated and fixed" means that two nut members can rotate in relation to each other while being maintained in a coaxial relationship and can be fixed at a desired relative rotating position.

The solving means function in the following way.

Since the two nut members are freely relatively rotatable and fixable, when the two nut members are relatively rotated, being in mesh with the thread shaft such that pressure contact force works on the ends of the two nut members, the relative movement in the advancing or retrieving direction of the thread grooves of the thread shaft and the nut members causes the pitch of the thread groove of the nut member to be shifted from the pitch of the thread groove of the thread shaft by a specified distance. As a result, preload works on the position between the thread groove of the thread shaft and the thread groove of the nut members and works oppositely on the two nut members so that the aforesaid backlash can be eliminated. At that time, the direction of the preload is equal to the direction of taper concentrating on the axis of the thread shaft so that the coaxial relationship between the thread grooves of the thread shaft and the nut members is enhanced. In consequence, the centering of the thread shaft is improved.

Since the coupled sections of the two nut members are relatively rotatable and fixable, if preload is varied due to wear of the grooves, application of preload can be adjusted or reset by setting and fixing them in a new relative rotation angle condition.

As described above, the coupled sections of the two nut members can be set in a condition in which a specified preload is applied to them, by relative rotation and fixation, so that preload can be easily added and adjustment of preload can be facilitated. In addition, the centering of the thread shaft with respect to the nut members can be improved.

Other objects, features, aspects and advantages of the invention will become more apparent from the following detailed description of embodiments with reference to the accompanying drawings and appended claims.

### Brief Description of the Drawings

FIGURE 1 illustrates a press using a ball screw constructed according to a first embodiment of the invention.
FIGURE 2 is a sectional view of the ball screw of the first embodiment.
FIGURE 3 illustrates a retainer (3) of the first embodiment.
FIGURE 4 is a sectional view taken along line I - I of FIGURE 3.
FIGURE 5 illustrates a second embodiment of the invention.
FIGURE 6 is a sectional view showing the relationship between a ball and a thread groove according to the second embodiment.
FIGURE 7 illustrates a third embodiment of the invention.
FIGURE 8 is a sectional view of a fourth embodiment of the invention.
FIGURE 9 is a front view of a thread shaft (1) of the fourth embodiment when viewed in an axial direction.
FIGURE 10 is a sectional view taken along line II - II of FIGURE 9 showing the fourth embodiment.
FIGURE 11 is an enlarged detailed view of a thread-to-thread opposing area of the forth embodiment.
FIGURE 12 is a sectional view taken along line III - III of FIGURE 11.
FIGURE 13 illustrates another example of mutual fixation of two flanges (20) and a controlling mechanism.
FIGURE 14 is a sectional view taken along IV - IV of FIGURE 13.
FIGURE 15 illustrates another example of the connected area of the flanges (20).

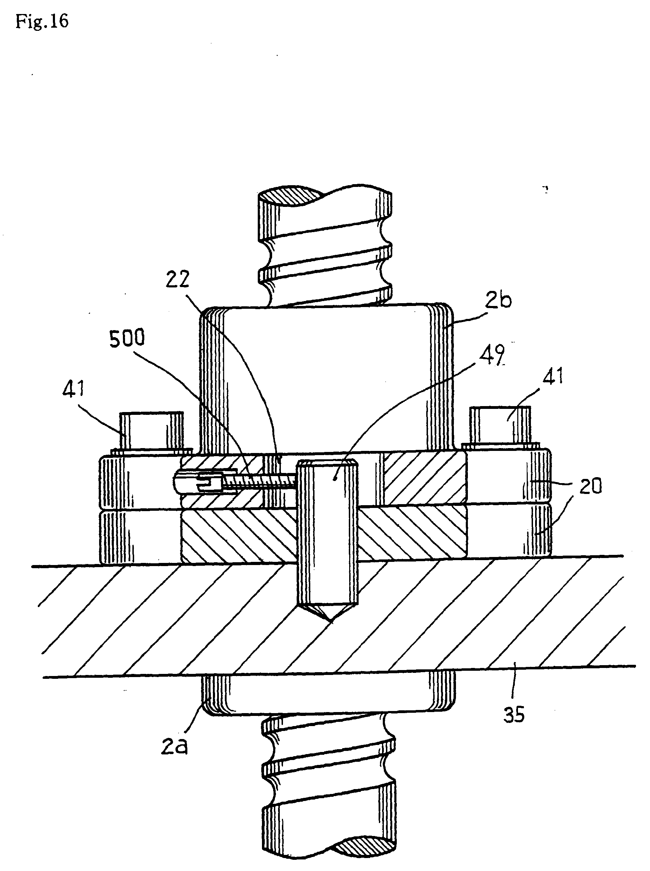

FIGURE 16 is a sectional view showing an example in which a pin (49) is pushed by a set screw (500).
FIGURE 17 is a sectional view of an example of prior art.

### Detailed Description of the Embodiments

Referring now to the drawings, embodiments of the invention will be hereinafter described.

### [First Embodiment]

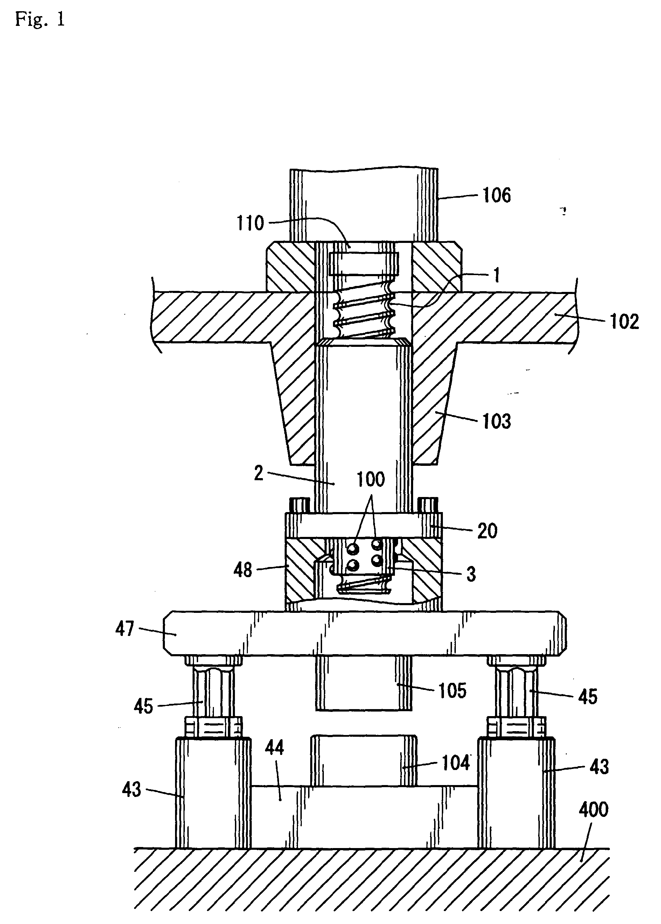

The first embodiment shown in FIGURE 1 is associated with a linearly movable apparatus (i.e., press) using a ball screw constructed according to the invention.

In this press, a thread shaft (1) is coupled to a drive shaft (110) which is reciprocatingly driven by a servo motor (106) attached to the top surface of an upper crosspiece (102) of a frame.

A nut member (2) is fitted on the thread shaft (1), being slidably inserted into a tubular portion (103) attached to the upper crosspiece (102) of the frame. A flange (20) formed in the lower end of the nut member (2) is connected by screws to a tubular portion (48) formed on the top surface a lift plate (47) for a die set. The die set is composed of a fixed mount (44) having a plurality of guide bushings (43) and secured to a bed (400) and the above lift plate (47) provided with a plurality of guide posts (45) which are slidably fitted in the guide bushings (43).

The lift plate (47) has a punch (105). The fixed mount (44) has a die (104). And the lift plate (47) having the nut member (2) is lifted and lowered by the operation of the ball screw in accordance with the reciprocating rotation of the output shaft of the servo motor (106), whereby pressing operation is carried out.

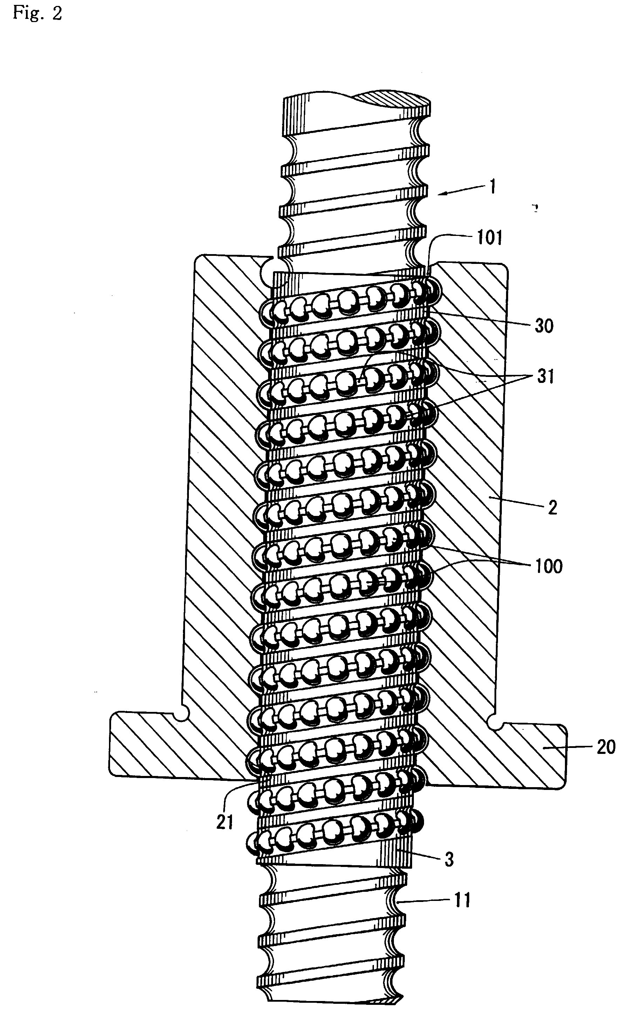

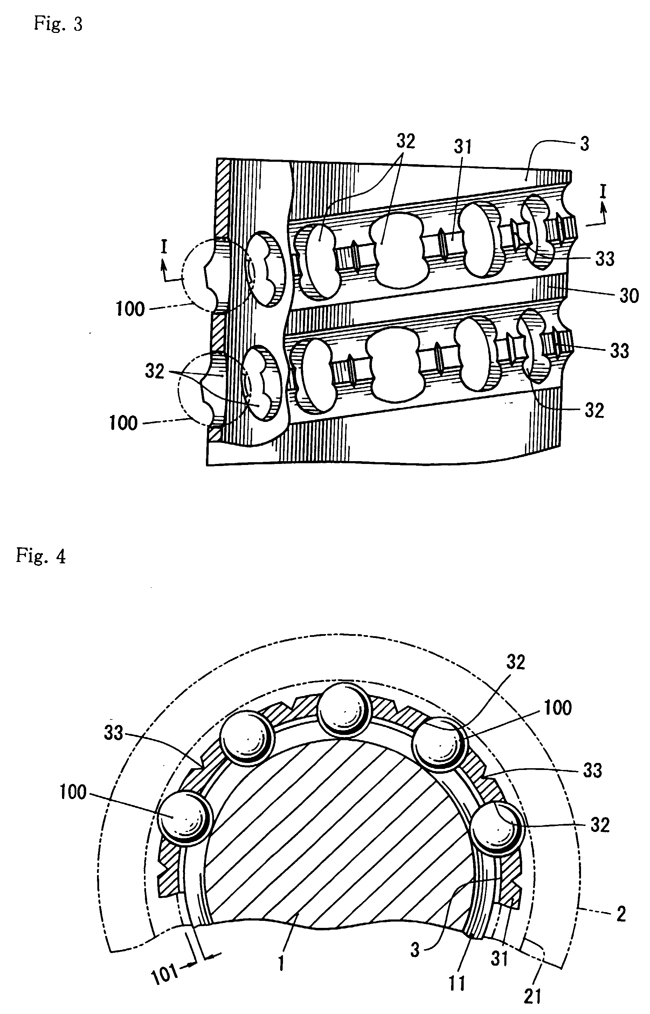

A number of balls (100) are interposed between the nut member (2) and the thread shaft (1). The relationship between these members is shown in FIGURES 2 and 3, and the thread groove (11) of the thread shaft (1) and the thread groove (21) of the nut member (2) are in the form of a substantially semi-circular groove, being cut in the same direction. There are provided a number of balls (100) which are inserted at a predetermined pitch between the thread grooves (11) and (21).

The balls (100) are interposed between the thread grooves (11) and (21), being pressurized at a specified pressure and held by a retainer (3) which is interposed between the thread shaft (1) and the nut member (2).

The thread shaft (1) of this embodiment is designed to be longer than the length of the nut member (2) in an axial direction and to project from the ends of the nut member (2) in an axial direction. On the other hand, the length of the retainer (3) is set to be longer than that of the nut member (2).

### [Retainer (3)]

The retainer (3) of this example is made from a synthetic resin, oleo-metal, or the like. As shown in FIGURES 2 and 3, the thickness of a thin wall area (30) located between ball holding sections is set to such a value that allows the retainer (3) to be inserted with clearance into a minimum spacing (101) between the nut member (2) and the thread shaft (1). The retainer (3) has, at its outer peripheral surface, a convex bar (31) which continues in the form of a screw and projects so as to correspond with the thread groove (21). The convex bar (31) is designed to have a thickness which allows the convex bar (31) to be accommodated within the thread groove (21) of the nut member (2) with clearance. As shown in FIGURES 3 and 4, a number of through holes (32) are formed in the formation area of the convex bar (31), for instance, by cutting work, for accommodating the balls (100).

As mentioned earlier, the retainer (3) is designed to have such a thickness that allows the retainer (3) to be inserted with clearance within the minimum spacing (101) between the nut member (2) and the thread shaft (1).

As shown in FIGURES 3 and 4, the diameter of the through holes (32) on the inner peripheral surface side is slightly smaller than that of the balls (100) so that a ball (100) can be forcibly inserted into each through hole (32), whereas the spacing between the edges of the convex bar (31) which face each through hole (32) on the outer peripheral surface side is considerably smaller than the diameter of the balls (100). Thus, the balls (100) can be held by the retainer (3) so as to be prevented from falling out. More specifically, the balls (100) are held in such a condition that they never escape to the outer periphery side of the retainer (3).

Incorporation of the balls (100) into the through holes (32) is carried out in the following way.

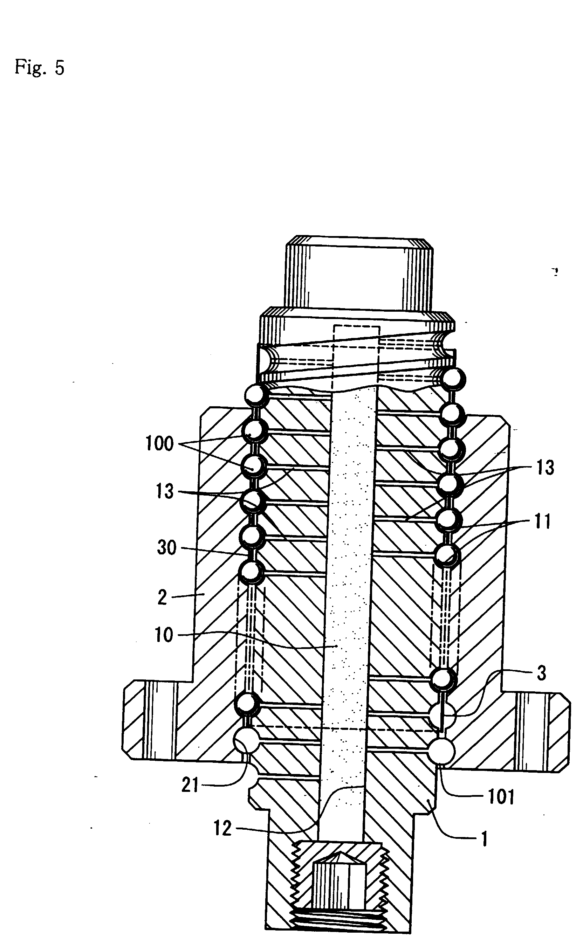

As shown in FIGURE 5, the diameter of the through holes (32) on the inner periphery side of the retainer (3) is set to be slightly smaller than the diameter of the balls (100). The balls (100) are accommodated within the respective through holes (32) and a chisel is driven into the top of the convex bar (31) at the intermediate position between every two adjacent through holes (32) thereby inscribing (caulking) a V-shaped groove. This causes the material existing on both sides of the V-shaped, plastically-processed section (33) to project into the through holes (32), whereby the balls (100) are held so as to be prevented from falling out and so as to leave a margin for rotation. The holes thus formed are ball retaining holes.

In case that the diameter of the through holes (32) on the inner periphery side of the retainer (3) is larger than the diameter of the balls (100), the balls (100) may be respectively fitted in the through holes (32) from outside and then the above-described caulking may be carried out, after the retainer (3) has been fitted on the thread shaft (1).

The retainer (3), in which the balls (100) are accommodated in the through holes (32) in the above-described way, is assembled into the ball screw shown in FIGURE 2, together with the thread shaft (1) and the nut member (2). The above-described press is assembled using this ball screw, by attaching the flange (20) formed on one end of the nut member (2) to the lift plate (47) for the aforesaid die set and coupling the thread shaft (1) to the output shaft of the servo motor (106).

In this press, the retainer (3) is set at the bottom dead center of the lift plate (47) such that the whole retainer (3) is accommodated within the nut member (2). In this condition, the thread shaft (1) is driven by the operation of the servo motor (106) so as to rotate in one direction so that the nut member (2) is pulled up and the retainer (3) accommodating the balls (100) projects downward from the nut member (2), owing to a relationship of the thread grooves (11), (21) and the balls (100).

Since the balls (100) in the above condition are held so as to be prevented from falling out, by means of the ends of the convex bar (31) at the through holes (32) as shown in FIGURE 4, there is no opportunity for fallout of the balls (100). When the thread shaft (1) is reciprocatingly rotated by the servo motor (106) at high speed, the centrifugal force of this rotation causes an external force working on the balls (100) outwardly in a radial direction, however, the edges of the convex bars (31) securely prevent escape of the balls (100).

Although the present embodiment has been described with the concept of the lifting/lowering drive mechanism of a press which performs stamping operation by use of the punch (105) attached to the lift plate (47) and the die (104) mounted on the fixed mount (44) in the present embodiment, it is obvious that the above ball screw is applicable to other types of linearly movable mechanisms.

### [Second Embodiment]

The second embodiment shown in FIGURE 5 is designed to supply a lubricant to the rolling contact portions of the balls (100). In this embodiment, the thread shaft (1) is hollow and has small holes (13) which penetrate through the thread shaft (1) extending between a hollow portion (12) and the thread groove (11); the hollow portion (12) is filled with a fiber material such as felt or a porous material such as sponge, the fiber or porous material being impregnated with a lubricant; and the hollow portion (12) is tightly sealed at both ends.

In the above arrangement, the lubricant of the lubricant impregnated member (10) made from the fiber or porous material is supplied to the thread groove (11) through the small holes (13) thanks to the capillary phenomenon of the small holes (13), so that the supply of the lubricant to the rolling contact portions of the balls (100) is stabilized for a long period of time, resulting in improvements in the durability of the ball screw.

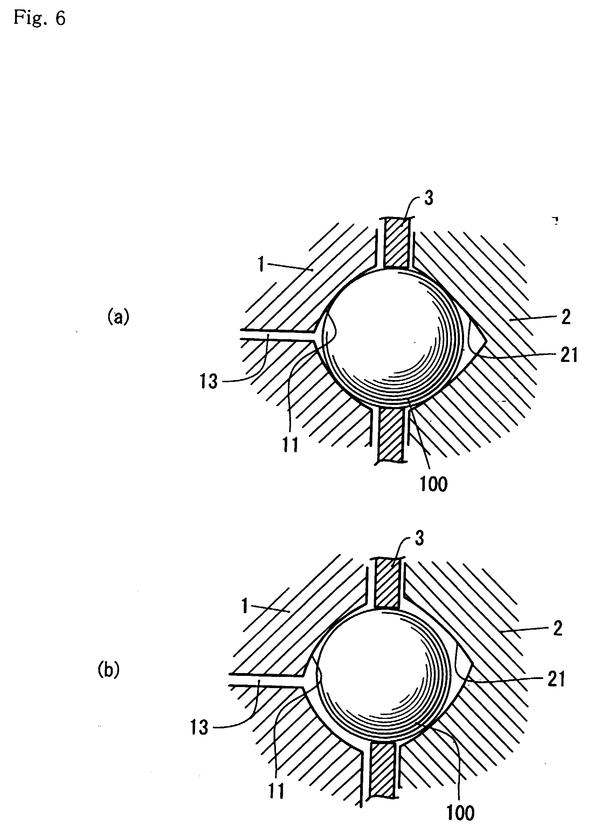

In this case, the root of the thread groove (11) does not contact the balls (100), but the profile of the thread groove (11) is usually formed as shown in FIGURE 6-a in which both sides of the section of the thread groove (11) are partially in contact with the balls (100) or as shown in FIGURE 6-b in which only one circular arc section portion contacts the balls (100). Therefore, the presence of the small holes (13) does not interfere with the rolling movement of the balls (100). The number of small holes is one or two for every lead of the thread groove (11).

### [Third Embodiment]

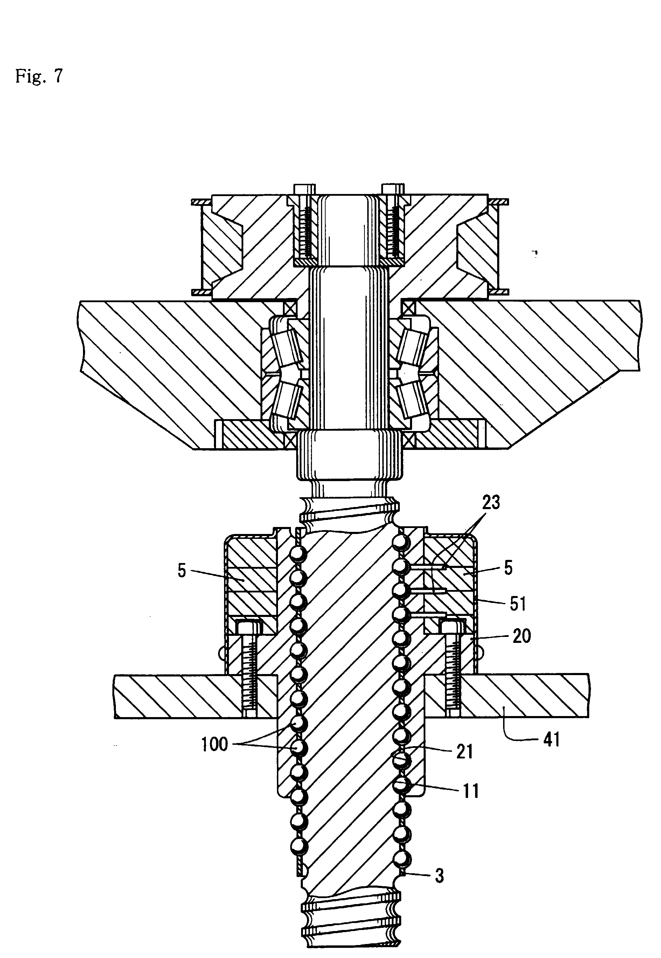

In the third embodiment shown in FIGURE 7, the invention is applied to the same press as that of the first embodiment and the nut member (2) of the ball screw is provided with the lubricant feeder of the second embodiment.

In the third embodiment, there is provided a lubricant bearing section (5) above the flange (20) of the nut member (2). The lubricant section (5) is formed from a fiber or porous material impregnated with a lubricant and is sealed with a cover (51). By communicating holes (23) through which the nut member (2) penetrates, the lubricant bearing section (5) and the root of the thread groove (21) of the nut member (2) are allowed to communicate with each other. In this embodiment, since the diameter of the communicating holes (23) is set to a specified value, the lubricant contained in the lubricant bearing section (5) is supplied to the thread groove (21) because of the capillary phenomenon. With this arrangement, the durability of the ball screw can be improved like the embodiment 2.

In this embodiment, even when the lift plate (47) to which the flange 20 is attached is reciprocatingly lifted and lowered at high speed, only the thread shaft (1) reciprocatingly rotates while the nut member (2) ascends or descends without rotation, so that the movement of the lubricant caused by the capillary phenomenon is unaffected. Therefore, there do not arise inconveniences such as leakage of the lubricant to the outside due to a centrifugal force caused by the rotation of the thread shaft (1).

It is apparent that the lubricant supply system used in the foregoing embodiment is applicable to ball screws having a ball return passage such as used in the prior art.

It should be noted that the lubricant feeding path is not limited to the above comunicating holes (23) and small holes (13) and where the supply of the lubricant is carried out through a lubricant feeding path disposed outside the nut member (2), the lubricant is supplied through the minimum spacing (101).

### [Fourth Embodiment]

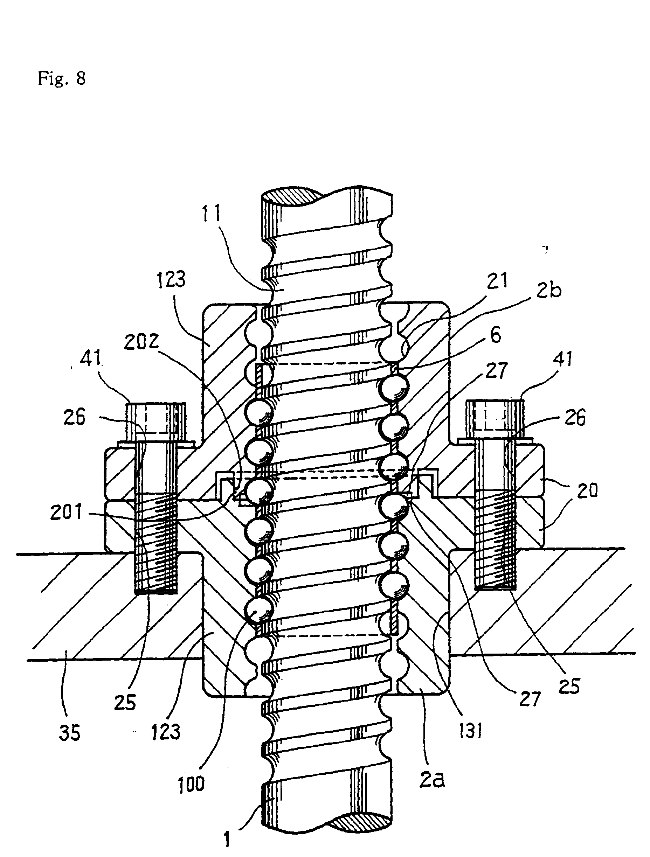

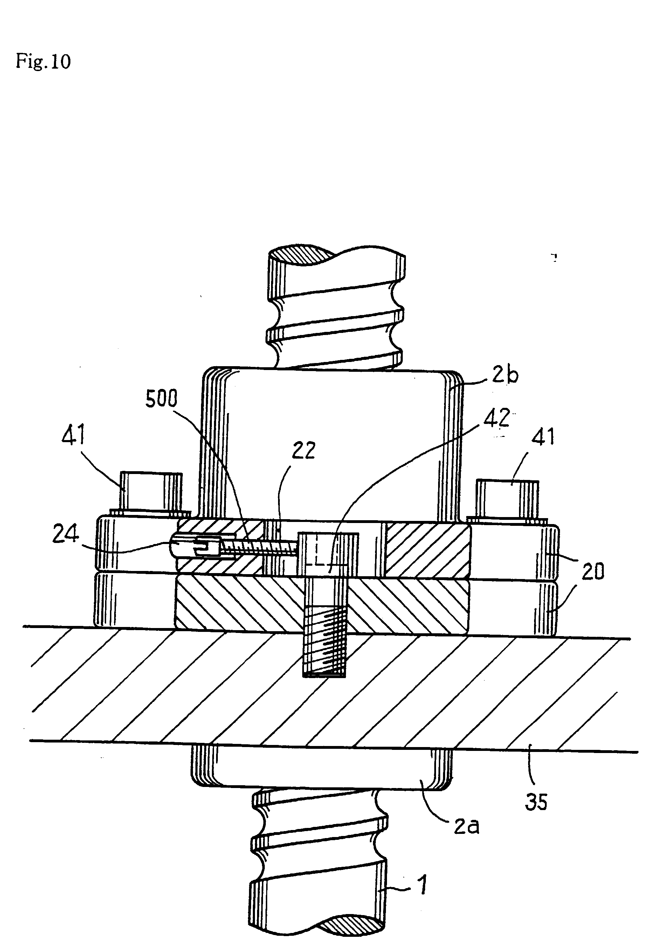

The fourth embodiment shown in FIGURES 8 through 11 is directed to a ball screw having two nut members (2a), (2b), in which each ball (100) is interposed between the thread groove (11) and the thread groove (21), being held by a retainer (6) interposed between the thread shaft (1) and the nut members (2a), (2b). The helically connection (length in an axial direction) of the thread shaft (1) and the nut members (2a), (2b) is set within a specified range.

The nut members (2a), (2b) each have a flange (20) projecting from one end of a thread tube (123) and the flanges (20) of the nut members (2a), (2b) are opposed and tightly connected to each other. The thread tube (123) of one (2a) of these nut members of this embodiment is inserted in a through hole (131) defined in a fixed wall (35) and the flange (20) of the nut member (2a) is connected to the fixed wall (35) with fixed screws (42). Accordingly, the heads of the fixed screws (42) pierce through the flange (20) of the other nut member (2b) and these through holes are elongated holes (22) which are aligned in a circular arc line. This circular arc is centered on the axis center of the nut member (2b) and the heads have a relationship in which they are relatively movable along the above circular arc line with respect to the elongated holes (22).

Set screws (500) are housed in the flange (20). Each set screw (500) is provided in the tangential direction of the center line of the circular arc in which the elongated holes (22) are aligned. The tip of each set screw (500) faces the head of one of the fixed screws (42) and the tool corresponding section of each set screw (500) is accommodated in a hole (24) defined in the outer peripheral surface of the flange (20).

In addition to the fixed screws (42), there are provided a pair of tie bolts (41) which pierce through the flanges (20) of both of the nut members (2a), (2b), being screwed to the fixed wall (35).

The through holes for the tie bolts (41) for the nut member (2a) are round holes (25), while the through holes defined in the flange (20) of the nut member (2b) are circular arc shaped, elongated holes (26) similar to the above elongated holes (22). The width of the elongated holes (26) is, of course, smaller than that of the heads of the tie bolts (41).

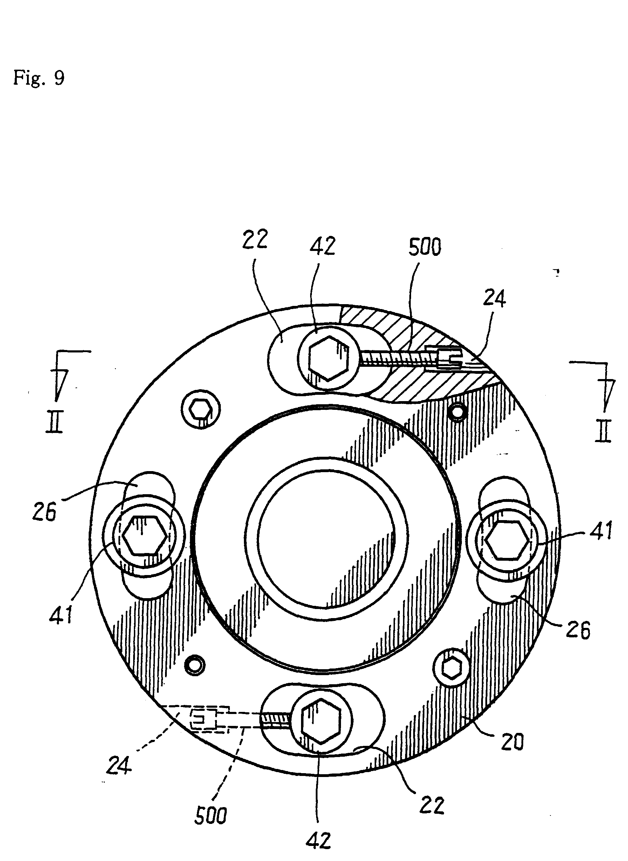

Each tie bolt (41), fixed screw (42) and elongated hole (22), (26) are located in every quarter part of the circumference of the flange (20) and the tie bolts (41) and the fixed screws (42) are alternately aligned along the circumference, as shown in FIGURE 9.

Relief grooves (27) are formed at the contact parts of the flanges (20), the contact parts continuously extending to an edge of the thread groove (21). The relief grooves (27) have a specified depth greater than the outer diameter of the thread groove (21) and a width in an axial direction which is sufficient to allow the balls (100) to change preload between the thread groove (11) and the thread groove (21) in the position between the two nut members (2a), (2b). The relief grooves (27) may be formed in a region equal to or longer than the circumference of the thread groove (21) or alternatively formed along the thread groove (21) within a specified angular range (no more than 360 degrees), extending to such an extent that allows changes in the direction of the preload.

Next, one example of the applications of the fourth embodiment will be explained below.

As shown in FIGURES 8 to 10, the ball screw is attached to the fixed wall (35), with the flanges (20) of the two nut members (2a), (2b) facing each other. In this case, one (2a) of the nut members is first tightened to the fixed wall (35) with the pair of fixed screws (42) and then the other nut member (2b) is loosely connected to the fixed wall (35) in a temporarily connecting condition using the pair of tie volts (41).

In this condition, the thread groove (21) of the two nut members (2a), (2b) and the thread groove (11) of the thread shaft (1) are set so as to be fitted to each other. Accordingly, there is created backlash corresponding to the room between the balls (100) and the thread grooves (11), (21).

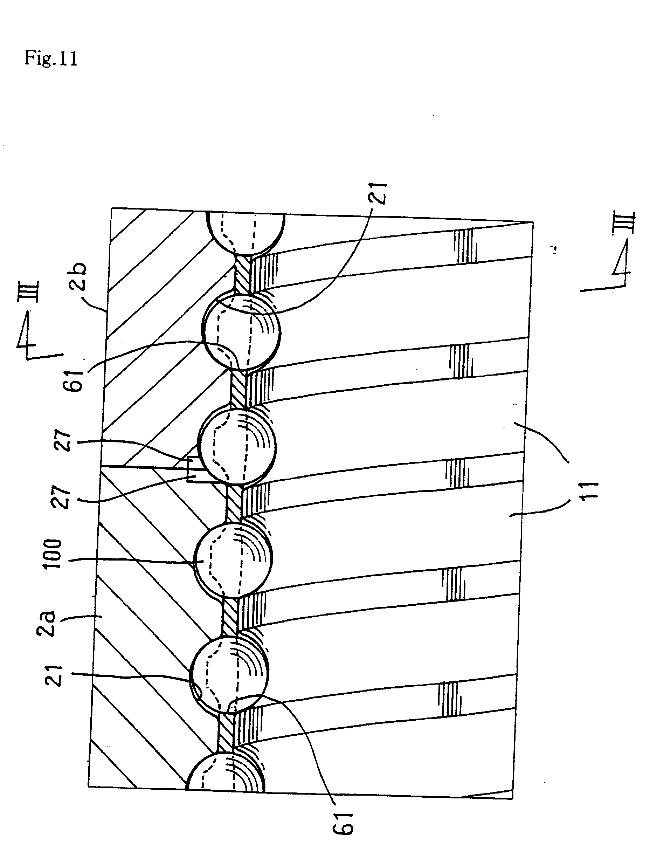

When the set screws (500) are fastened in this condition, the flange (20) of the nut member (2b) is rotated relative to the flange (20) of the nut member (2a) in its fixed state, according to the tightening degree of the set screws (500). In this example, since rotation in the direction (retrieving direction) opposite to the advancing direction of the thread of the thread groove (11) is given by tightening of the set screws (500) as shown in FIGURE 11, the thread groove (21) of the nut member (2a) is shifted to the left in FIGURE 11 in relation to the thread groove (11), while the thread groove (21) of the nut member (2b) being shifted to the right in the same figure. By virtue of this arrangement, each ball (100) is tightly held between the left flank of a ridge of the thread groove (21) and the right flank of a ridge of the thread groove (11) in the nut member (2a). In the nut member (2b), on the other hand, each ball (100) is tightly held between the left flank of a ridge of the thread groove (21) and the right flank of a ridge of the thread groove (11). As a result, the thread shaft (1) and the nut members (2a), (2b) are helically fitted to each other with the balls (100) between in such a condition that backlash occurring at both sides of the axis of the thread shaft (1) is prevented.

Accordingly, when the thread shaft (1) is driven to rotate, the nut members (2a), (2b) advance or retrieve in an axial direction in accordance with the rotation of the thread shaft (1).

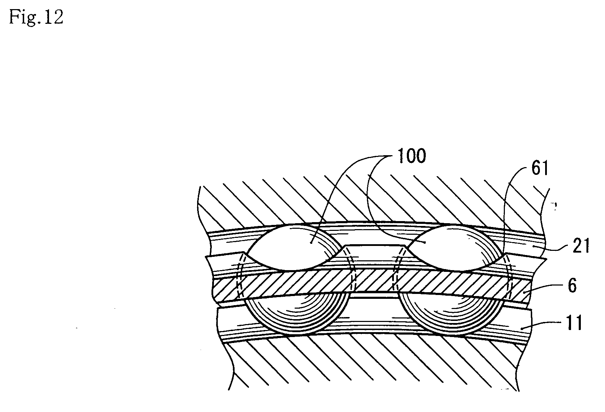

In this embodiment, the total angle of rotation of the thread shaft (1) is preset to no more than a certain angle and therefore the rolling range of the balls (100) relative to the nut members (2a), (2b) is no more than a certain range so that the balls (100) reciprocate at a specified stroke, while being held by the retainer (6). During this reciprocating movement, the retainer (6) and the balls (100) stick out of the nut members (2a), (2b) depending on the stroke, but the sticking out portion of each ball (100) is held by the retainer (6) so as to be prevented from escaping, so that there is no opportunity for fallout of the balls (100). This effect can be achieved by either the arrangement in which each ball (100) is loosely fitted in and held by peripheral wall of through holes (61) formed in the retainer (6) such that the ball (100) is prevented from escaping inwardly and outwardly, or the arrangement each ball (100) is held between the inner peripheral edge of the above through hole and the thread groove (11) such that the ball (100) is prevented from escaping. To this end, the portion of the retainer (6) corresponding to the thread groove (21) is partially thickened and the through holes (61) are formed in this thickened part as shown in FIGURES 11 and 12.

In cases where the balls (100) located in either one of the two nut members (2a) and (2b) move into the other during the rolling movement of the balls (100), the clamping direction of the thread grooves (21), (11) is changed, but an unclamped part is caused by the plurality of relief grooves (27) at the position where the clamping direction changes, so that the movement of the balls (100) from one of the nut members (2a), (2b) to the other is performed smoothly. In addition, an abrupt change in the direction of pinching pressure prevents such troubles as occurrence of abnormal noise and vibration.

There may be provided only one relief groove (27) which is disposed in either of the two nut members (2a), (2b).

The direction of pinching pressure applied to the balls (100) may be opposite to that of the above embodiment.

In this case, each set screw (500) of the above embodiment is oriented in a direction opposite to its associated fixed screw (42).

Although the flanges (20) of the two nut members (2a), (2b) are designed to be opposed and tightly connected to each other in the fourth embodiment, an alternative arrangement may be employed. According to the alternative arrangement, the tubular nut members (2a), (2b) have no flanges and the mortise and tenon joint is employed to join the two tubular nut members (2a), (2b) at their joint ends in such a fashion that the nut members (2a), (2b) are rotatable relative to each other and fixable at desired positions. In this way, the relative postures of the two nut members (2a), (2b) in their rotating directions can be adjusted.

### [Others]

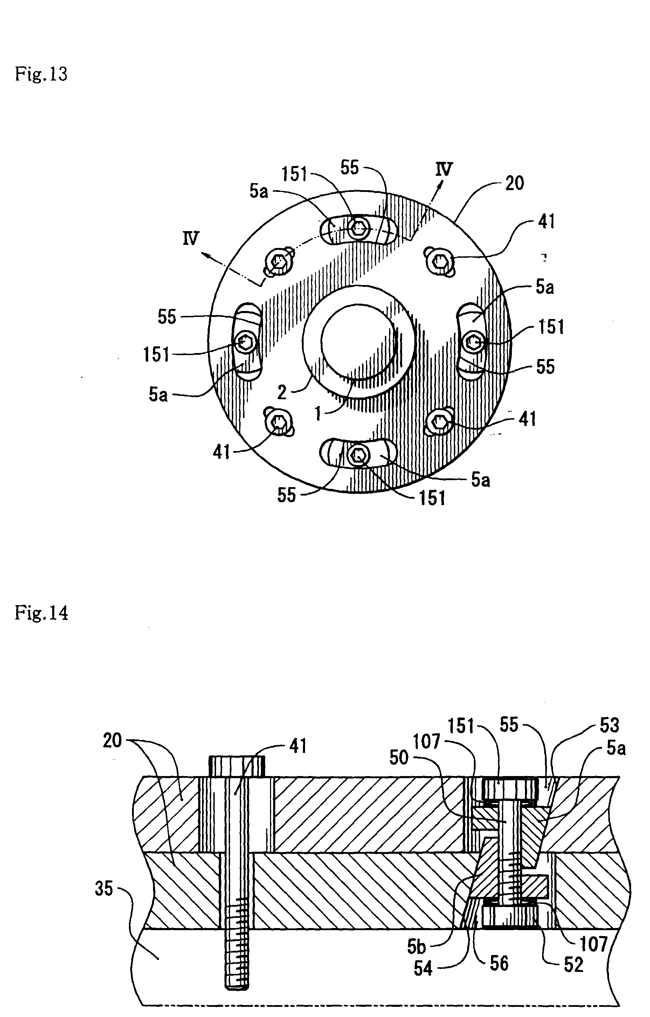

Another alternative is such that the relative postures of the nut members (2a), (2b) in their rotating directions is adjusted by use of a pair of wedge mechanisms as shown in FIGURES 13, 14.

In this case, either of the flanges (20) which is fixed to the fixed wall (35) by the plurality of tie bolts (41) similarly to the above embodiment, is provided with a transparent hole (55) having an inclined surface (53) in either of the rotating directions. The other flange (20) is provided with a transparent hole (56) having an inclined surface (54) in the other rotating direction. These inclined surfaces incline in the same direction. A wedge body (5a) which slidably contacts to the inclined surface (53) and a wedge body (5b) which slidably contacts to the inclined surface (54) are arranged so as to face each other in an axial direction. A bolt (50) is inserted between these wedge bodies and a spring (107) is respectively interposed between a bolt head (151) and the wedge body (5a) and between a nut (52) and the wedge body (5b). In this arrangement, by clamping the tie bolt (50), reactive force to contact pressure, which is generated at the contact faces of the slant faces of the wedge bodies (5a), (5b) and the inclined surfaces (53), (54), is converted into a rotary force for relatively rotating the two flanges (20) so that the relative postures of the nut members (2a), (2b) in their rotating directions can be adjusted similarly to the fourth embodiment. In this adjusted condition, the pair of flanges (20) are secured to the fixed wall (35) by means of the tie bolts (41).

In any of the first to fourth embodiments, the flanges (20), which are tightly connected to the fixed wall (35), may be provided with elongated holes (22) in order to assure the fixation of the flanges (20) by the tie bolts (41).

Although the thread shaft (1) is designed to be rotatively driven in this embodiment, the thread shaft (1) may be disposed in a fixed member so as to be freely movable in an axial direction while the fixed wall (35) to which the two nut members (2a), (2b) are fixedly attached is rotatively driven. Such a ball screw can be utilized in the mechanism in which the thread shaft (1) reciprocates in an axial direction with respect to the fixed wall (35) which reciprocatingly rotates at a certain position.

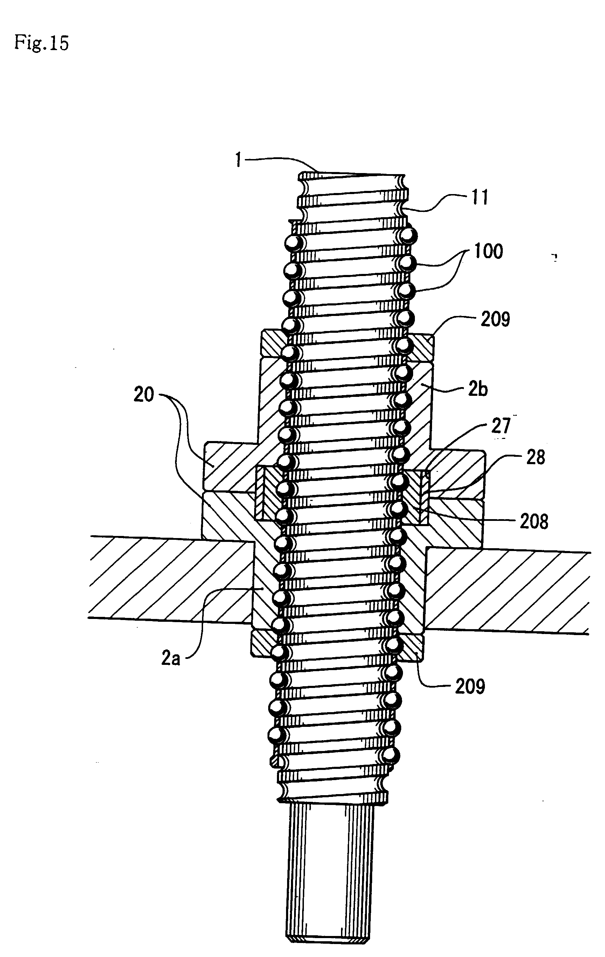

As shown in FIGURE 15, relief grooves (27) are provided at a thread shaft-penetrating section on the opposed surfaces of the flanges (20) of the nut members (2a), (2b), the relief grooves (27) being annular recesses having a diameter larger than that of the thread grooves of the nut member pair. A collar (28) is inserted into each relief groove so as to be inscribed in its outer peripheral wall and a pad (208) impregnated with a lubricant is disposed on the inner periphery side of each collar (28). This arrangement has the advantage of supplying oil from the pads (208) during the relative movement of the thread shaft (1). Various materials can be used for the pads (208). For instance, porous synthetic resinous materials may be used. In this case, since these materials have specified hardnesses and moldability, ring pads (209) may be fixedly attached to the outer end surfaces of the nut members (2a), (2b) in a circumscribing condition. In this case the lubricant can be fed from three points.

The fitting tolerance of the outer diameter of the collars (28) is about h6 and that of the inner diameter of the relief grooves (27) is set to about H6. Where clearance fit is done with these fitting tolerances, the flanges (20) are kept within these fitting tolerances and therefore even if unbalance occurs in the pressing force of each set screw (500) in the fourth embodiment, the coaxial relationship of the flanges (20) within these tolerances can be ensured. Once correct balance is established in the pressing force of the set screws (500), the aforesaid centering function by the screw grooves (11), (21) and the balls (100) is obtained. The same effect can be achieved in the case in which an annular convex section (201) provided for one of the flanges (20) is tightly fitted in an annular concave section (202) as shown in FIGURE 8.

It should be noted that the convexity-concavity fitting by use of the collars (28) may be replaced with other arrangements. For instance, one of the flanges (20) is provided with an annular convex section while the other flange being provided with an annular concave section and these convex and concave sections are fitted to each other with a specified fitting tolerance, thereby attaining the coaxial relationship described earlier.

While the heads of the fixed screws (42) are pushed by the set screws (500) in the above embodiment shown in FIGURES 8 to 12, the member with which the tip of each set screw (500) is brought into contact may be the pin (49) which positions the flange (20) of the first nut member (2a) with respect to the fixed wall (35). This pin (49) projects into the elongated hole (22) of the other flange (20) with a room for movement. In this case, it does not matter whether or not one of the flanges (20) is secured by the fixed screws (42). When the final tightening is performed by the tie bolts (41) after the relative rotation angle position has been adjusted by the set screws (500) with the tie bolts (41) being in their temporarily connecting condition similarly to the forgoing embodiment, the two nut members (2) are fixed in such a condition that their relative postures in the circumferential directions are set to specified postures. In this case, each set screw (500) comes in contact with the trunk surface of the head of the pin (49), the trunk surface being flat and satisfactorily accurate, and therefore the accuracy of the adjustment of the relative postures by the plurality of set screws (500) can be improved.

## Claims

1. A ball screw comprising:
a thread shaft and a nut member which have their respective thread grooves which are formed such that their threads are opposed to each other with a plurality of balls between the thread grooves; and
a tubular retainer interposed between the thread shaft and the nut member so as to be freely movable relative to them,
wherein the retainer is provided with a plurality of ball retaining holes which are formed so as to correspond with the thread grooves, for holding the balls in such a manner that the balls are exposed from the inner and outer surfaces of the retainer,
wherein the ball retaining holes have such a size as to hold the balls in a freely rotatable condition, the outer ends of peripheral walls defining each ball retaining hole face the inside of the thread groove of the nut member, and at least the minimum spacing between the outer ends of the peripheral walls is smaller than the diameter of the balls, and
wherein the thread shaft is longer than the nut member.

2. A linearly movable apparatus using the ball screw described in claim 1, wherein the thread shaft of the ball screw is coupled to an output shaft of a rotating drive and wherein the nut member is coupled to a moving part relatively movable in relation to the rotating drive.

3. A linearly movable apparatus according to claim 2, wherein the nut member is composed of a first nut member and a second nut member which are coaxially coupled to each other being aligned in series, by means of coupled sections which can be freely relatively rotated and fixed.

4. A linearly movable apparatus according to claim 3,
wherein the relatively rotatable and fixable coupled sections have flanges formed on the respective coupling ends of the first and second nut members,
wherein the flanges respectively have joint surfaces which are tightly connected to each other,
wherein a plurality of tie bolts are inserted into one of the flanges so as to permit said relative rotation and inserted into the other flange, and
wherein both of the flanges are fixed by tightening the plurality of tie bolts.

5. A linearly movable apparatus according to claim 4,
wherein the joint surfaces of the flanges of the first and second nut members are each provided with an annular recess which continues to the root of the thread groove of the nut members, and
wherein the diameter of the annular recess is greater than the diameter of the root of the thread groove of the nut members.

6. A linearly movable apparatus according to claim 3, 4 or 5,
wherein one of the flanges coupled to each other is provided with a fitting convex section which is coaxial with of the nut members while the other flange is provided with a fitting concave section into which the fitting convex section is tightly fitted, and
wherein the end surface of the fitting convex section and the bottom surface of the fitting concave section are said joint surfaces.
